# EUROPEAN PATENT SPECIFICATION

(11) **EP 1 792 668 B1**
(45) Date of publication and mention of the grant of the patent: **06.03.2013**
(21) Application number: 06125083.3
(22) Date of filing: 30.11.2006
(51) Int. Cl.: B21B 1/38

(54) **Method for reducing shearing and crop losses at rolling of assembled slabs**
Verfahren zum Reduzieren von Scher- und Schopfverlusten bei montierten Brammen
Procédé de reduction de pertes de cisaillement et d'éboutage des brames assemblées

(30) Priority: 01.12.2005 SE 0502633
(43) Date of publication of application: 06.06.2007
(73) Proprietor: Sapa Heat Transfer, 612 81 Finspang (SE)
(72) Inventor: Åkesson, Conny, 610 10 Ljusfallshammar (SE)
(74) Representative: Melin Granberg, Linda

(56) References cited:
- WO-A2-01/56782
- JP-A- 59 178 105
- JP-A- 61 262 456
- US-A- 4 238 946

## Description

### BACKGROUND OF THE INVENTION

The present invention relates to the rolling of assembled metal slabs and, more particularly, to methods for increasing slab rolling yields and rolling mill efficiency by minimizing shearing and crop losses in the rolling of assembled slabs. This favourable increase in material yield and rolling efficiency is achieved by a new slab geometry formed in one or both edges of the slab. The slab geometry is formed by machining or during casting. The invention is most advantageously applied to the manufacture of aluminium rolled products.

A widely used method of manufacturing aluminium plate, sheet and foil products initially involves the vertical semi-continuous casting of slabs which includes a bottommost leading end, referred to in the art as the "butt" of the slab. The butt is formed as the liquid metal solidifies on the movable bottom block or starter block which is in the open bottom of the mould. The bottom block continuously moves downwardly and away from the mould as the solidified metal slab exits at the open end of the mould at the location previously occupied by the bottom block. The sidewalls of the mould and the sidewalls of the solidified slab exiting the mould are sprayed with water to increase the solidification rate. This casting technique is referred to as direct chill or "DC" casting.

The slabs may then be scalped to remove as-cast surface imperfections and further homogenized by heating in a furnace to provide a uniform chemistry across the slab cross-section prior to laminating with a second or further slab. The second slab is commonly of an aluminium alloy of different composition welded to the core, often a braze material or a cladding aimed at improving the corrosion behaviour.

In order to process the thus treated slabs to useful end products, such as sheet, plate, foil or the like, the slabs are preferably welded together at the edges and thereafter heated to a desired rolling temperature and subjected to a plurality of hot rolling passes in a hot rolling mill to laminate the slabs, followed by cold rolling, whereby a clad materials results. The core slab may be assembled to several further slabs, located on either side of the slab core or on the same side, and often made from a softer metal than the core, such as a braze material with a high silicon content. The slabs forming the clad may also be made from aluminium alloys aimed at improving the corrosion resistance of the rolled strip.

The resulting material is useful as a heat exchanger strip or plates, e g as a fin or tube material as well as for evaporator and header plates.

The free surfaces existing on a slab of finite width, thickness and length allow non-uniform rolling deformation to occur in the length and width dimensions during hot rolling. This non-uniform deformation causes an elongation of the slab in the centre region thereof which forms a convex, longitudinally extending "tongue" condition at the edges thereof, particularly in aluminium slabs which are roughed down in reversing mills, usually without the use of side or edge rolls. Formation of a tongue condition is, however, not uncommon in the rolling of aluminium even in mills equipped with edge rolls. When rolling a clad material, such as a slab for heat exchanger strip, the clad is often softer than the core, thus deforming more easily, making the problem of non-uniform deformation more severe. The force acting on the slabs will be higher at the edges running parallel to the rolling direction, due to the elastic deformation of the rolls. This leads to the formation of an uneven clad close to the edges of the slab and to an increased shearing loss.

In JP59027701 the edges of the side faces of a steel slab has continuous corrugations in order to minimize flaws and reduce margins for trimming. This measure has not shown to be efficient for clad slabs.

The aforesaid non-uniform deformation phenomenon is equally severe in the length direction of the slab leading to another condition referred to in the art as "fold over", "overlap" or "alligatoring". These objectionable conditions at the ends of the slab grow worse as rolling continues and must eventually be removed by a crop shear to permit further rolling to continue.
It is (also) well-known that the overlap causes an internal lamination crevice in the metal which grows during rolling and will result in unsound plate and sheet products unless it is removed by shearing.

The use of a clad material also makes recycling of the scrap more difficult, due to the mixed composition in the assembled material.

Previous experimental work has been undertaken JP61262456 in an effort to reduce slab rolling shearing and crop losses by tapering the ends of the slab by deforming the edges of a slab by issuing inclined rolls to increase the yield at rolling. The clad is cast onto the deformed core to create a thicker clad at the edges of the slab, thereby assuring a thick enough cladding also at the edges. The problem with unevenness of the cladding will however remain.

WO01/94050 discloses an aluminium slab with a reduced cross-section in the ends of the slab to reduce crop losses. The problem of uneven clad deformation during rolling is not assessed.

The present invention overcomes the shortcomings of the prior art by providing a method and a slab of specific geometry for reducing hot mill crop and shearing losses at the edges of a assembled structure for aluminium rolled products which greatly improves mill productivity and metal yield, particularly in the hot rolling of aluminium products.

The present invention discloses a method and a product which provide a core slab having a special configuration formed at longitudinal edges running parallel to the rolling direction of the slab. The specially configured slab provided by the present invention minimizes the occurrence of an uneven clad thickness during slab rolling, thus reducing the shearing and crop losses to increase mill productivity and metal recovery.
1. The present invention provides an assembled structure arranged for a rolling process comprising:
   - a core slab having:
      first and second ends and there between longitudinal edges running parallel to the rolling direction and
         a reduced cross-section in the thickness direction of the core slab in at least one of the longitudinal edges, and
   - at least one second slab arranged in a parallel relationship with the core slab.

Secondly, the present invention also provides a method of producing an aluminium strip from the assembled structure by hot rolling and cold rolling the slab to a suitable gauge as well as the strip so produced.

Thirdly, the present invention provides a method of reducing shearing and crop losses at the rolling of slabs, by
(a) providing a core slab with a reduced cross-section in the thickness direction of the slab in at least one of the slab edges
(b) providing at least one second slab
(c) optionally scalping the slabs
(d) assembling the slabs
(e) conducting a plurality of rolling passes on said slabs to laminate said slabs and to reduce the thickness thereof and elongate said slab, whereby a metal strip with an even clad thickness is obtained.

The strip may be used in heat exchanger applications.

The reduction of the cross-sectional area is preferably made by machining, but other methods, such as the formation of the special shape during casting of the slab, is not excluded.

The invention will now be described in more detail, references below being made to the accompanying drawings wherein
Figure 1 (a) is a cross-section of an edge of a clad slab perpendicular to the rolling direction after some rolling passes according to the state of the art.
Figure 1 (b) a cross-section of an edge of clad slab perpendicular to the rolling direction after some rolling passes according to the invention.
Figure 2 shows a cross section of an edge of a clad slab perpendicular to the rolling direction before rolling. The slab has a modified shape according to one embodiment of the invention.
Figure 3 shows a cross-section of an edge of a clad slab before rolling. The slab has a modified shape according to one embodiment of the invention.
Figure 4 shows the pressure exerted by the rolls on a slab, with and without a cut-out in the edge centre.

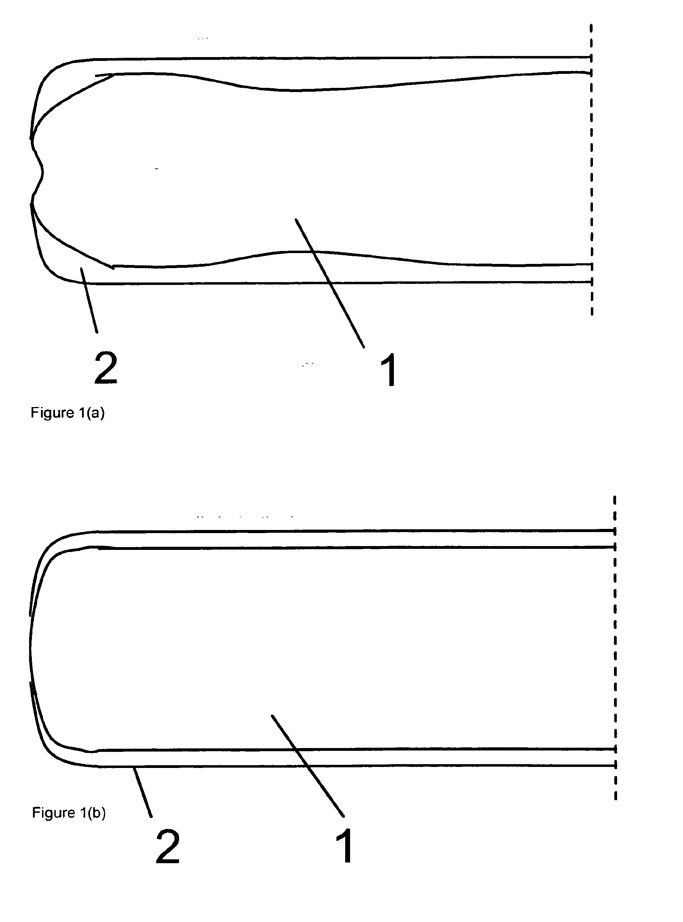

Figure 1 (a) demonstrates the problem that occurs when rolling a clad slab of conventional shape. The edges assume a tongue-shape when the material in the centre of the core (1) is pushed out while the surface material flow is restricted by the friction forces applied by the rolls. When the core is clad, the clad (2) will, due to it being softer than the core, deform more easily, thereby experiencing "over-run" of the clad around the edges. At the edges of the slab the clad/core ratio gets non-uniform, resulting in loss of material as the edges have to be trimmed.

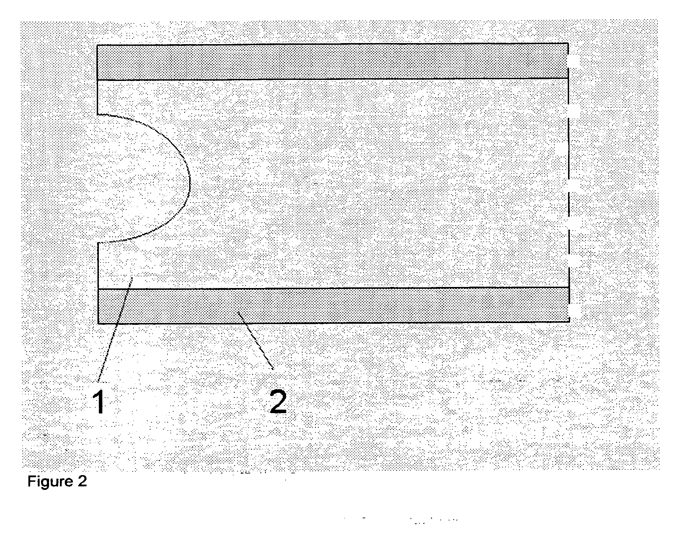

When a cut-out is machined in the slab edge according to figure 2 the slab deforms in a way that minimizes the formation of an uneven clad (see fig 1 (b)) and thus reduces the amount of scrap accordingly. The cut out can have any shape, but is preferably in the shape of a U, a V or a polygon. The cut-out may be located in the centre of the slab, or may be displaced from the centre of the slab in the thickness direction, that is in the direction perpendicular to the plane of the slab, so that the deformation resistance of the core is adjusted to the hardness of the core slab in relation to the hardness of the second slab. The deformation of the second slab will then be more uniform.

It is preferable that the cut-out extends across at least a third of the slab thickness, more preferably at least half the thickness of the slab. In accordance to this said cross section of the core slab will be reduced by at least one third or by at least half, respectively. The cut-out or tapered shape of the edges may be combined with tapered slab ends so that the core has a reduced cross-section in the thickness direction of the core slab in at least one of the slab ends perpendicular to the rolling direction. For attachment, e g by welding, of the second or third slab to the core slab a cut-out is however preferred.

The depth of the cut-out into the core edge should preferably be greater than the width in the thickness direction. Most preferably the depth should be at least 1,5 times the width in the thickness direction.

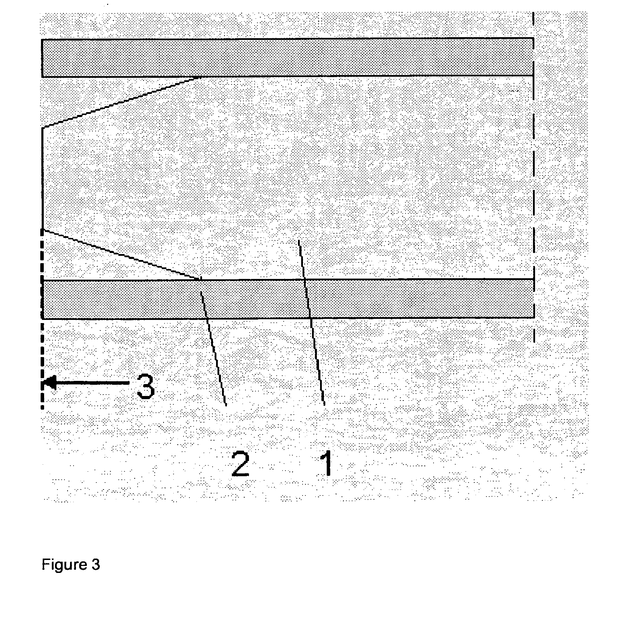

The edges of the slab may alternatively, or in combination with the cut-out, have a tapered shape according to figure 3. This modified shape also reduces the problem with uneven clad thickness and consequently the amount of scrap. The second or third slab should extend to the edge (3) of the core slab, in order to provide material for cladding the core slab as the core deforms during rolling. This configuration keeps the slab from slipping against the rolls, thus providing a more even core/clad thickness ratio.

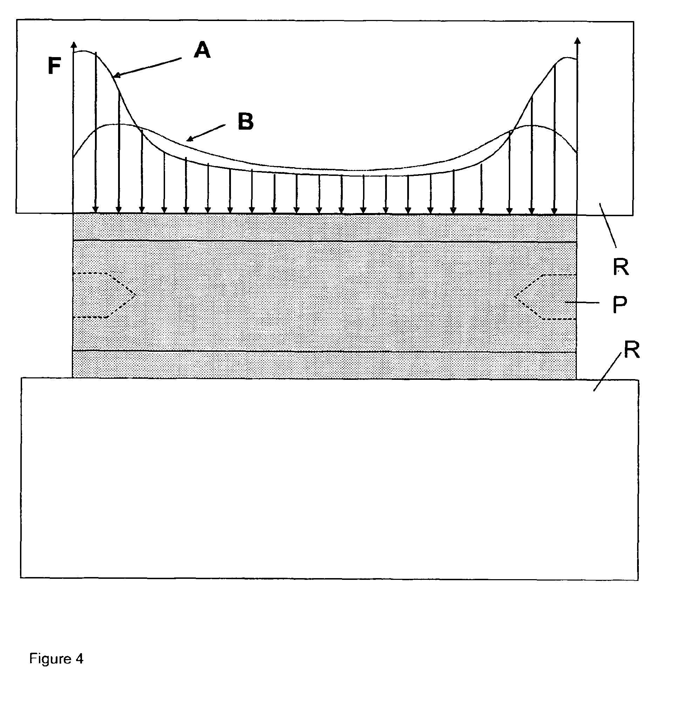

In figure 4 the force exerted by the rolls "R' on an assembled structure according to the invention is shown, curve A showing the force for slabs according to the prior art and curve B showing the force for slabs having a cut-out in the shape of a polygon (P). As can be seen the variation of the force exerted is much smaller in curve B, due to a smaller elastic deformation of the rolls when the core cross-section is reduced. The resulting clad is thereby more even in thickness over the width of the strip and the loss at trimming of the edges smaller.

The reduction in thickness may be any of the mentioned cut-out or surface tapers, used singly or in combination. The reduction of the core cross-section reduces the deformation resistance of the core at the edges (and ends, if used), and thereby the deformation of the clad at the clad edges (and ends) is reduced, leading to a more uniform clad thickness.

The material of the core slab and the clad may be any metal, but is mainly directed to aluminium alloys.

The rolled strip may be used as heat exchanger strip and plate for e.g. fins, tubes or header plates, evaporator plates.

The invention solves the problem of reducing shearing and crop loss by controlling the material flow as described above in order to improve the yield of aluminium production in rolling.

### Example

An aluminium alloy core slab was cast with the DC method and scalped to remove as-cast surface imperfections. A cut-out of polygon-shape (P) was machined in the edges of the slab according to figure 4 and the surfaces of the slab ends were machined to a taper shape according to figure 3. A second slab (scalped) of rectangular shape consisting of an aluminium braze alloy was welded to the core slab at the edges thereof. The slabs were hot rolled and cold rolled to the finished dimension. A piece of the resulting strip was cut off and hot mounted in resin and polished, and the cross-section of the strip was examined in an optical microscope. The variation in clad thickness over the strip width was less than 2% and the end part with defects was very small. The resulting strip was coiled and slit into strips and delivered to a heat exchanger manufacturer for further processing.

## Claims

1. An assembled structure arranged for a rolling process comprising:
- a core slab (1) having:
first and second ends and there between longitudinal edges running parallel to the rolling direction and
a reduced cross-section in the thickness direction of the core slab (1) in at least one of the longitudinal edges,
**characterized in, that**
- at least one second slab (2) arranged in a parallel relationship with the core slab (1).

2. The assembled structure according to claim 1, wherein said reduced cross section is provided by at least one cut-out at the centre of the edge.

3. The assembled structure according to claim 1, wherein said reduced cross section is provided by at least one cut-out, the cut-out being displaced from the centre of the slab (1) in the thickness direction.

4. The assembled structure according to any of claims 1-3, wherein reduced cross section is provided in the form of a taper of the upper and/or lower surface of the core slab (1) in the direction of the edge.

5. The assembled structure according to any of the preceding claims, wherein a total reduction of the cross section is at least one third of the slab (1) thickness.

6. The assembled structure according to any of claims 1-4, wherein a total reduction of the cross section is at least half the slab (1) thickness.

7. The assembled structure according to any of the preceding claims, wherein the depth of the cut-out is greater than the width of the cut-out in the thickness direction, preferably greater than 1,5 times the width.

8. The assembled structure according to any of the preceding claims, wherein the cut out has one of the shape of a U, a V and a polygon.

9. The assembled structure according to any of the preceding claims, wherein the at least one second slab (2) extends to the edge (3) of the core slab.

10. The assembled structure according to any of the preceding claims, wherein the core (1) slab is made from an aluminium alloy.

11. The assembled structure according to claim 9, wherein the at least one second slab (2) is made of a softer metal than the core slab (1).

12. The assembled structure according to any of claims 9 or 10, wherein the at least one second slab (2) is an aluminium alloy different from the core slab (1) alloy.

13. The assembled structure according to any of the preceding claims, wherein the at least one second slab (2) is made from a braze alloy.

14. The assembled structure according to any of the preceding claims, where the at least one second slab (2) has a rectangular cross-section.

15. The assembled structure according to any of the preceding claims, wherein:
- the core has a reduced cross-section in the thickness direction of the core slab (1) in at least one of the slab ends perpendicular to the rolling direction.

16. A method of producing a clad strip, comprising the step of:
(a) providing a core slab (1) having a reduced cross section in the thickness direction of the slab in at least one of the slab edges,
**characterized by** the steps of:
(b) providing at least one second slab (2),
(c) optionally scalping the slabs (1, 2),
(d) assembling a core slab (1) and the at least one second slab (2) to form an assembled structure according to any of claims 1-15, and
(e) hot rolling and cold rolling the assembled structure in said longitudinal direction until it reaches a suitable gauge.

17. The method according to claim 16, comprising the step of:
- machining said edge of the core slab to achieve said reduction of the cross section of the core slab (1).

18. The method according to claim 16, comprising the step of:
- performing said reduction of the cross section of the core slab (1) at the casting of said core slab (1).

## Patentansprüche

1. Gefügte Struktur, eingerichtet auf ein Walzverfahren, umfassend:
- eine Kernbramme (1) mit:
einem ersten und einem zweiten Ende und dazwischen Längskanten, die parallel zu der Walzrichtung verlaufen, und
einem verringerten Querschnitt in der Dickenrichtung der Kernbramme (1) in mindestens einer der Längskanten,
**dadurch gekennzeichnet, dass**
- mindestens eine zweite Bramme (2) in einer parallelen Beziehung zur Kernbramme (1) angeordnet ist.

2. Gefügte Struktur gemäß Anspruch 1, wobei der verringerte Querschnitt durch mindestens eine Aussparung in der Mitte der Kante bereitgestellt wird.

3. Gefügte Struktur gemäß Anspruch 1, wobei der verringerte Querschnitt durch mindestens eine Aussparung bereitgestellt wird, wobei die Aussparung von der Mitte der Bramme (1) in der Dickenrichtung versetzt ist.

4. Gefügte Struktur gemäß einem der Ansprüche 1 - 3, wobei der verringerte Querschnitt in Form einer Abschrägung der oberen und/oder der unteren Oberfläche der Kernbramme (1) in Richtung der Kante bereitgestellt wird.

5. Gefügte Struktur gemäß einem der vorhergehenden Ansprüche, wobei eine gesamte Verringerung des Querschnitts mindestens ein Drittel der Dicke der Bramme (1) ist.

6. Gefügte Struktur gemäß einem der Ansprüche 1 - 4, wobei eine gesamte Verringerung des Querschnitts mindestens die Hälfte der Dicke der Bramme (1) ist.

7. Gefügte Struktur gemäß einem der vorgenannten Ansprüche, wobei die Tiefe der Aussparung größer ist als die Breite der Aussparung in der Dickenrichtung, vorzugsweise 1,5 Mal größer als die Breite.

8. Gefügte Struktur gemäß einem der vorgenannten Ansprüche, wobei die Aussparung eine der Formen eines U, eines V und eines Polygons hat.

9. Gefügte Struktur gemäß einem der vorgenannten Ansprüche, wobei die mindestens eine zweite Bramme (2) sich bis zu der Kante (3) der Kernbramme erstreckt.

10. Gefügte Struktur gemäß einem der vorgenannten Ansprüche, wobei die Kernbramme (1) aus einer Aluminiumlegierung hergestellt ist.

11. Gefügte Struktur gemäß Anspruch 9, wobei die mindestens eine zweite Bramme (2) aus einem weicheren Metall hergestellt ist als die Kernbramme (1).

12. Gefügte Struktur gemäß einem der Ansprüche 9 oder 10, wobei die mindestens eine zweite Bramme (2) eine andere Aluminiumlegierung ist als die Legierung der Kernbramme (1).

13. Gefügte Struktur gemäß einem der vorgenannten Ansprüche, wobei die mindestens eine zweite Bramme (2) aus einer Hartlotlegierung hergestellt ist.

14. Gefügte Struktur gemäß einem der vorgenannten Ansprüche, wobei die mindestens eine zweite Bramme (2) einen rechteckigen Querschnitt hat.

15. Gefügte Struktur gemäß einem der vorgenannten Ansprüche, wobei:
- der Kern einen verringerten Querschnitt in der Dickenrichtung der Kernbramme (1) in mindestens einem der Brammenenden rechtwinklig zur Walzrichtung hat.

16. Verfahren zur Herstellung eines plattierten Bands, umfassend den Schritt:
(a) Bereitstellen einer Kernbramme (1) mit einem verringerten Querschnitt in der Dickenrichtung der Bramme an mindestens einer der Brammenkanten,
**gekennzeichnet durch** die Schritte:
(b) Bereitstellen von mindestens einer zweiten Bramme (2),
(c) optionales Schälen der Brammen (1, 2),
(d) Fügen einer Kernbramme (1) und der mindestens einen zweiten Bramme (2) zur Bildung einer gefügten Struktur gemäß einem der Ansprüche 1 - 15 und
(e) Warm- und Kaltwalzen der gefügten Struktur in der Längsrichtung, bis sie eine geeignete Dicke erreicht.

17. Verfahren gemäß Anspruch 16, umfassend den Schritt:
- maschinelles Bearbeiten der Kante der Kernbramme, um die Verringerung des Querschnitts der Kernbramme (1) zu erzielen.

18. Verfahren gemäß Anspruch 16, umfassend den Schritt:
- Durchführen der Verringerung des Querschnitts der Kernbramme (1) beim Gießen der Kernbramme (1).

## Revendications

1. Une structure assemblée adaptée au processus de laminage comprenant :
- une dalle à noyau (1) ayant :
une première et seconde extrémité et entre les bords longitudinaux parallèles au sens du laminage et
une section transversale réduite dans le sens de l'épaisseur de la dalle à noyau (1), sur au moins un des bords longitudinaux, et
**caractérisée par** le faite que
- au moins une deuxième brame (2) soit disposée en parallèle avec la dalle à noyau (1).

2. La structure assemblée conformément la revendication 1, où ladite section transversale réduite et fournie au moins par une découpe au milieu du bord.

3. La structure assemblée conformément à la revendication 1, où ladite section transversale réduite est fournie par au moins une découpe, cette découpe étant déplacée du centre de la brame (1) dans le sens de l'épaisseur.

4. La structure assemblée conformément à l'une des revendications de 1 à 3, où la section transversale réduite est fournie sous la forme conique de la surface supérieure et/ou inférieure de la dalle à noyau (1) en direction du bord.

5. La structure assemblée conformément à l'une des revendications susmentionnées, où une réduction totale de la section transversale correspond au moins au tiers de l'épaisseur de la brame (1).

6. La structure assemblée conformément à l'une des revendications de 1 à 4, où une réduction totale de la section transversale correspond au moins à la moitié de l'épaisseur de la brame (1).

7. La structure assemblée conformément à l'une des revendications susmentionnées, où la profondeur de la découpe est supérieure à la largeur de la découpe dans le sens de l'épaisseur, de préférence 1,5 fois plus grande que la largeur.

8. La structure assemblée conformément à l'une des revendications susmentionnées, où la découpe a une forme en U, en V et un polygone.

9. La structure assemblée conformément à l'une des revendications susmentionnées, où au moins une deuxième brame (2) s'étend sur le bord (3) de la dalle à noyau.

10. La structure assemblée conformément à l'une des revendications susmentionnées, où la dalle à noyau (1) est faite en alliage d'aluminium.

11. La structure assemblée conformément à revendication 9, où au moins une deuxième brame (2) est faite avec un métal plus souple que celui de la dalle à noyau (1).

12. La structure assemblée conformément à l'une des revendications 9 ou 10, où au moins une deuxième brame (2) est faite d'un alliage d'aluminium différent de l'alliage de la dalle à noyau (1).

13. La structure assemblée conformément à l'une des revendications susmentionnées, où au moins une deuxième brame (2) est faite d'un alliage de brasage.

14. La structure assemblée conformément à l'une des revendications susmentionnées, où au moins une deuxième brame (2) possède une section transversale rectangulaire.

15. La structure assemblée conformément à l'une des revendications susmentionnées, où :
- le noyau possède une section transversale réduite dans le sens de l'épaisseur de la dalle à noyau (1), dans au moins une des extrémités de la brame perpendiculaires au sens du laminage.

16. Une méthode produisant une bande plaquée, comprenant l'étape de :
(a) fournir une dalle à noyau (1) ayant une section transversale réduite dans le sens de
**caractérisée par** les étapes suivantes :
(b) fournir au moins une deuxième brame (2),
(c) éventuellement, scalper les brames (1, 2),
(d) l'assemblage d'une dalle à noyau (1) et au moins d'une seconde brame (2) pour former une structure assemblée conformément à l'une des revendications de 1 à 15 et
(e) le laminage à chaud et le laminage à froid de structures assemblées dans ledit sens longitudinal jusqu'à obtenir une jauge adéquate.

17. Une méthode conformément à la revendication 16, comprenant l'étape de :
- usiner ledit bord de la dalle à noyau pour obtenir ladite réduction de la section transversale de la dalle à noyau (1).

18. Une méthode conformément à la revendication 16, comprenant l'étape de :
- exécuter ladite réduction de la section transversale de la dalle à noyau (1) durant la coulée de ladite dalle à noyau (1).
